# EUROPÄISCHE PATENTSCHRIFT

(11) **EP 2 613 104 B1**
(45) Veröffentlichungstag und Bekanntmachung des Hinweises auf die Patenterteilung: **27.06.2018**
(21) Anmeldenummer: 12008066.8
(22) Anmeldetag: 01.12.2012
(51) Int. Cl.: F24S 25/30, F24S 25/61, E04D 13/18, B32B 11/04

(54) **Verfahren zum Herstellen eines Befestigungssystems, insbesondere für Bauelemente fotovoltaischer Anlagen**
Method for producing a fastening system, in particular for construction elements of photovoltaic systems
Procédé de fabrication d'un système de fixation, notamment pour les éléments de construction d'installations photovoltaïques

(30) Priorität: 09.01.2012 DE 102012000196
(43) Veröffentlichungstag der Anmeldung: 10.07.2013
(73) Patentinhaber: Gottlieb Binder Gmbh & Co. Kg, 71084 Holzgerlingen (DE)
(72) Erfinder: Poulakis, Konstantinos, 71157 Hildrizhausen (DE)
(74) Vertreter: Bartels und Partner, Patentanwälte

(56) Entgegenhaltungen:
- WO-A1-2007/138316
- WO-A1-2009/095273
- WO-A1-2012/153246
- WO-A2-2006/060161
- WO-A2-2008/063660
- DE-A1-102007 027 609
- DE-A1-102010 023 212
- DE-U1-202005 003 224
- US-A1- 2009 266 400
- US-A1- 2010 236 165
- US-A1- 2011 203 637

## Beschreibung

Die Erfindung betrifft ein Verfahren zum Herstellen eines Befestigungssystems, insbesondere für Bauelemente fotovoltaischer Anlagen, mit den Merkmalen im Oberbegriff von Anspruch 1.

Befestigungssysteme, bei denen Haftverbindungen aus miteinander in Eingriff bringbaren, komplementären Verhakungselementen benutzt werden, um Bauelemente, wie solartechnische Komponenten, an Trägerflächen, insbesondere Dachflächen, zu befestigen, sind Stand der Technik, vergleiche beispielsweise DE 103 29 184 A1 oder WO 2011/076307 A1. Bei der praktischen Anwendung solcher Systeme gestaltet sich das Anbringen des Verhakungselementes an der Anbringfläche der tragenden Struktur, also einer Gebäude- oder Dachfläche, nur in den Fällen unproblematisch, in denen die Oberflächenbeschaffenheit der Anbringfläche zur Herstellung der Verbindung mit dem Verhakungselement ausreichend geeignet ist. Bei Dachflächen ist dies vielfach nicht der Fall, etwa wenn Betonflächen oder raue Holzflächen oder Isolier- oder Dämmschichten vorgesehen sind. Eine zuverlässige Verbindung kann in solchen Fällen allenfalls unter Verwendung von speziellen Haftverschlusselementen hergestellt werden, bei denen die Verhakungselemente an einem Träger vorgesehen sind, der mit der jeweiligen Oberflächenbeschaffenheit der Anbringfläche kompatibel ist. Bei gebräuchlichen Haftverschlusselementen mit flausch-, vlies- oder gewebeartigem Träger ist dies nicht der Fall. Der Zwang zur besonderen Auswahl der zu verwendenden Haftverschlusselemente und die besonderen Maßnahmen, die für eine zuverlässige Anbringung der Haftverschlusselemente an der Anbringfläche zu ergreifen sind, führen im Stand der Technik zur Komplizierung und Kostensteigerung.

Die WO 2009/095273 A1, die WO 2008/063660 A2, die US 2009/ 0266400 A1, die US 2010/0236165 A1, die DE 10 2007 027 609 A1 und die WO 2006/060161 A2 beschreiben jeweils ein Verfahren zum Herstellen eines Befestigungssystems, insbesondere für Bauelemente fotovoltaischer Anlagen, vorzugsweise an Dachflächen bei Gebäuden, wobei in einem ersten Schritt eine Trägerfläche bereitgestellt wird, auf der mindestens eine Befestigungskomponente, bestehend aus Schlaufen- und/oder sonstigen Verhakungselementen, aufgebracht wird, die nach Festlegen der jeweiligen Befestigungskomponente im Montagezustand der Trägerfläche das Anbringen zumindest einer weiteren korrespondierenden Befestigungskomponente erlaubt, die, mit sonstigen Verhakungselementen versehen, die wieder lösbare Verbindung der zuordenbaren Befestigungskomponenten ermöglicht.

Im Hinblick auf diese Problematik liegt der Erfindung die Aufgabe zugrunde, ein Verfahren zur Herstellung eines Befestigungssystems aufzuzeigen, das eine einfache, sichere und kostengünstige Befestigung entsprechender Bauelemente ermöglicht.

Erfindungsgemäß ist diese Aufgabe durch ein Verfahren gelöst, das die Merkmale des Patentanspruches 1 in seiner Gesamtheit aufweist.

Demgemäß sieht das erfindungsgemäße Verfahren als eine wesentliche Besonderheit vor, dass zur Bildung der Trägerfläche eine Trägerbahn bereitgestellt wird, die in einer Transportrichtung an einer Auftragestation, an der eine Bitumenmasse aufgetragen wird, sowie an einer nachfolgenden Anbringstation vorbeibewegt wird, an der in einem ausgewählten Oberflächenbereich die zugeordnete Befestigungskomponente angebracht wird.

Es ist vorgesehen, dass eine Trägerfläche bereitgestellt wird, auf der mindestens eine Befestigungskomponente, bestehend aus Schlaufen- und/oder sonstigen Verhakungselementen, aufgebracht wird, die nach Festlegen der jeweiligen Befestigungskomponente im Montagezustand der Trägerfläche das Anbringen zumindest einer weiteren korrespondierenden Befestigungskomponente erlaubt, die, mit sonstigen Verhakungselementen versehen, die wieder lösbare Verbindung der zuordenbaren Befestigungskomponenten ermöglicht. Unabhängig vom jeweiligen Oberflächentyp der Anbringfläche oder Dachfläche steht so an der Oberseite der Trägerfläche für die Anbringung der Befestigungskomponente eine geeignete Verbindungsfläche zur Verfügung, so dass als Befestigungskomponente Haftverschlusselemente beliebigen, gewünschten Aufbaus einfach und sicher angebracht werden können. An zumindest einem Oberflächenbereich der Trägerfläche kann mindestens eine Befestigungskomponente, vorzugsweise durch Kaschieren oder Auflaminieren, angebracht werden. Bei Benutzung einer Trägerfläche aus Kunststoff kann vorzugsweise so vorgegangen werden, dass die Trägerfläche in Form einer dünnen Kunststoffplatte, vorzugsweis aus einem elastomeren Material, beispielsweise aus einem synthetischen Kautschukmaterial oder einem thermoplastischen Olefin, bereitstellt wird.

Bitumenschichten, wie sie als Isolier- oder Dämmschichten an Gebäude- oder Dachflächen verlegt werden, sind häufig mit eingelagertem oder angelagertem Granulat versehen. Bei Benutzung einer Bitumenschicht zur Bildung der Trägerfläche entsprechend dem erfindungsgemäßen Verfahren kann diesbezüglich so vorgegangen werden, dass die mit der Bitumenmasse und der Befestigungskomponente versehene Trägerbahn an einer Streu-Station vorbeibewegt wird, an der an von der Befestigungskomponente freien Flächenbereichen ein Granulat aufgebracht wird.

Bei einem Befestigungssystemist die jeweilige, mit der Trägerfläche durch Verhakung verbindbare Befestigungskomponente an einem als Halter für Bauelemente, insbesondere von Bauteilen fotovoltaischer Anlagen, vorgesehenen Tragelement angeordnet.

In besonders vorteilhafter Weise kann das jeweilige Tragelement in Form einer Tragschiene ausgebildet sein, die an der der Trägerfläche zugekehrten Seite mit der zugehörigen Befestigungskomponente in Form eines Haftverschlusselementes versehen ist. Hierbei kann das an der Trägerfläche befindliche Haftverschlusselement in Form zumindest eines sich an der Oberfläche der Trägerfläche erstreckenden Bandes vorgesehen sein, das sich entlang der jeweils zugeordneten Tragschiene erstreckt.

In besonders vorteilhafter Weise kann die jeweilige Tragschiene in Form eines Profils aus Kunststoff, beispielsweise einem Acryl-Nitril-Styrol-Acrylat ausgebildet sein. Ein derartiges Profil kann in einem Strangprozess extrudiert und in für den jeweiligen Einsatzzweck vorgesehene Längenabschnitte abgeteilt sein.

Vorzugsweise ist das jeweilige Profil als Hohlprofil ausgebildet, das Aufnahmeräume zum Halten von darin eingelegten Leitungen oder anderer Bauelemente fotovoltaischer Anlagen aufweist.

In besonders vorteilhafter Weise kann das jeweilige Hohlprofil Wandteile zur Bildung von Abstütz- und/oder Anbringbereichen für Solarpanel aufweisen.

Insbesondere für die Anbringung flexibler Solarpanel kann die Tragschiene in Form einer Profilleiste gestaltet sein, die mindestens einen Längsschlitz zur Aufnahme des darin eingesteckten Befestigungsrandes eines betreffenden Solarpanels aufweist.

Es ist ein Tragelement vorgesehen, wobei das Tragelement in Form einer aus einem Kunststoffmaterial extrudierten Tragschiene gebildet ist.

Es ist ferner auch eine Trägerfläche vorgesehen, die aus einer Bitumenmasse oder in Form einer dünnen Platte aus Kunststoff, vorzugsweise aus einem elastomeren Material, gebildet ist, wobei an der Oberseite der Trägerfläche zumindest ein Haftverschlusselement in einer Position angeordnet ist, die mit einem zugeordneten, zu befestigenden Tragelement in Lagebeziehung ist.

Nachstehend ist die Erfindung anhand von in der Zeichnung dargestellten Ausführungsbeispielen erläutert. Es zeigen:
- Fig. 1: eine abgebrochen gezeichnete perspektivische Schrägansicht einer Trägerfläche in Form einer Bitumenmasse mit daran befindlichem Haftverschlusselement als Bestandteil eines Ausführungsbeispiels des erfindungsgemäßen Befestigungssystems;
- Fig. 2: eine Seitenansicht des in Fig. 1 Gezeigten;
- Fig. 3: eine perspektivische Schrägansicht einer Trägerfläche in Form einer elastomeren Kunststoffplatte mit daran befindlichem Haftverschlusselement;
- Fig. 4: eine Schnittdarstellung entsprechend der Schnittlinie IV-IV von Fig. 3;
- Fig. 5: eine perspektivische Schrägansicht eines Längenabschnitts eines Ausführungsbeispiels eines Tragelements;
- Fig. 6: einen Querschnitt des Tragelements von Fig. 5 mit daran befindlichem, zugeordnetem Haftverschlusselement;
- Fig. 7 und 8: eine perspektivische Schrägansicht bzw. einen Querschnitt eines gegenüber Fig. 5 und 6 abgewandelten Ausführungsbeispiels eines Tragelements;
- Fig. 9: eine perspektivische Schrägansicht eines der Fig. 7 ähnlichen Tragelements mit darin eingelegten Leitungen;
- Fig. 10: einen Querschnitt des in Fig. 9 Gezeigten;
- Fig. 11: eine perspektivische Schrägansicht einer abgewandelten Ausführungsform des Tragelements in Form einer Profilleiste mit daran festgelegten Solarpaneln;
- Fig. 12: eine gegenüber Fig. 11 vergrößert gezeichnete Seitenansicht der Profilleiste; und
- Fig. 13: eine stark schematisch vereinfacht gezeichnete Darstellung einer Vorrichtung zur Herstellung einer erfindungsgemäßen Trägerfläche.

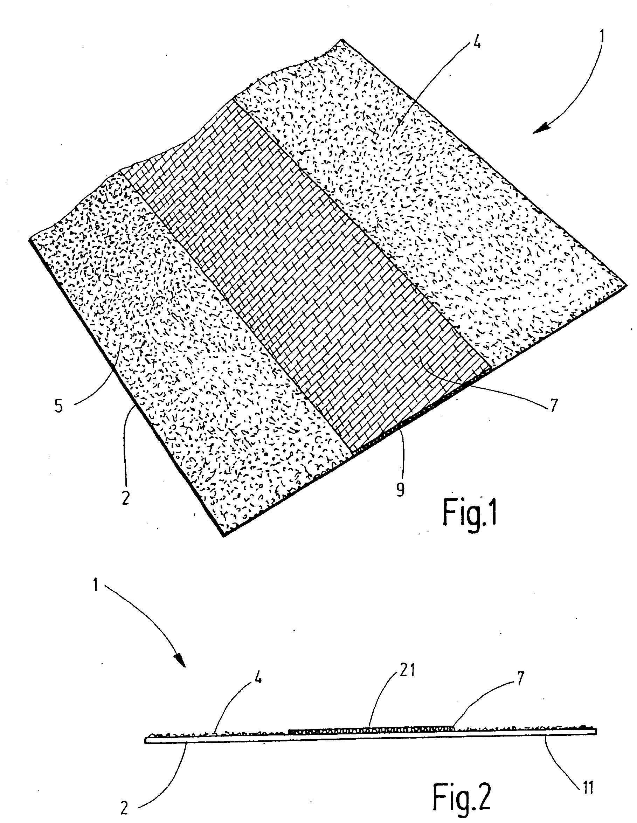

Das in Fig. 1 und 2 gezeigte Ausführungsbeispiel einer Trägerfläche 1 ist durch eine Bitumenbahn 2 gebildet, an deren Oberseite 5 ein Haftverschlusselement 7 befestigt ist. Dieses erstreckt sich in Form eines Streifens oder Bandes 9 über die Oberseite 5 der Bahn 2 aus Bitumenmasse, wobei der von dem Haftverschlusselement 7 freie Flächenbereich der Bitumenbahn 2 mit angelagertem Granulat 4 versehen ist. Die Bitumenbahn 2, die wesentlich großflächiger ausgebildet ist als das Haftverschlusselement 7, stellt mit ihrer Unterseite 11 einen entsprechend großflächigen Verbindungsbereich für die Verbindung mit einer entsprechenden Trägerfläche (die nicht dargestellt ist), beispielsweise einer Dachfläche oder Bestandteile derselben, zur Verfügung.

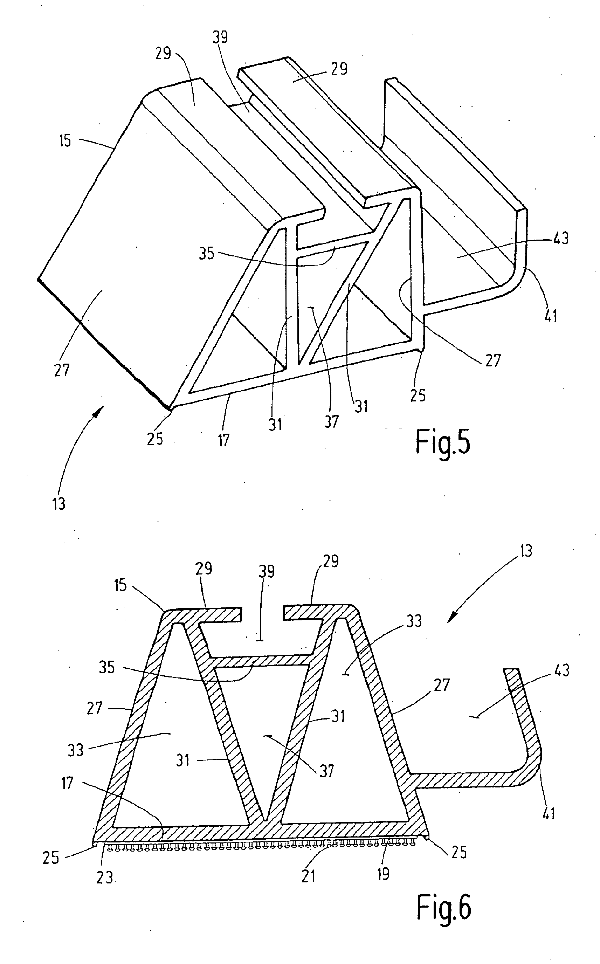

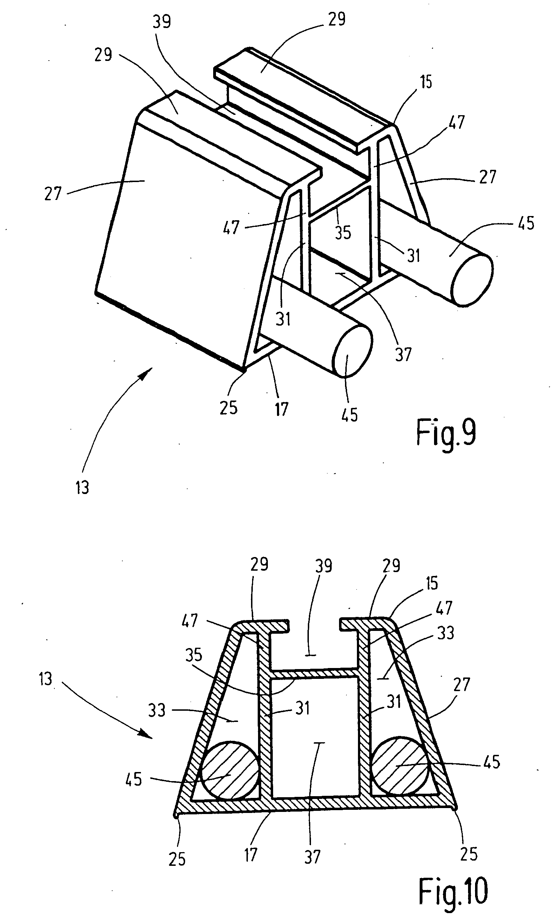

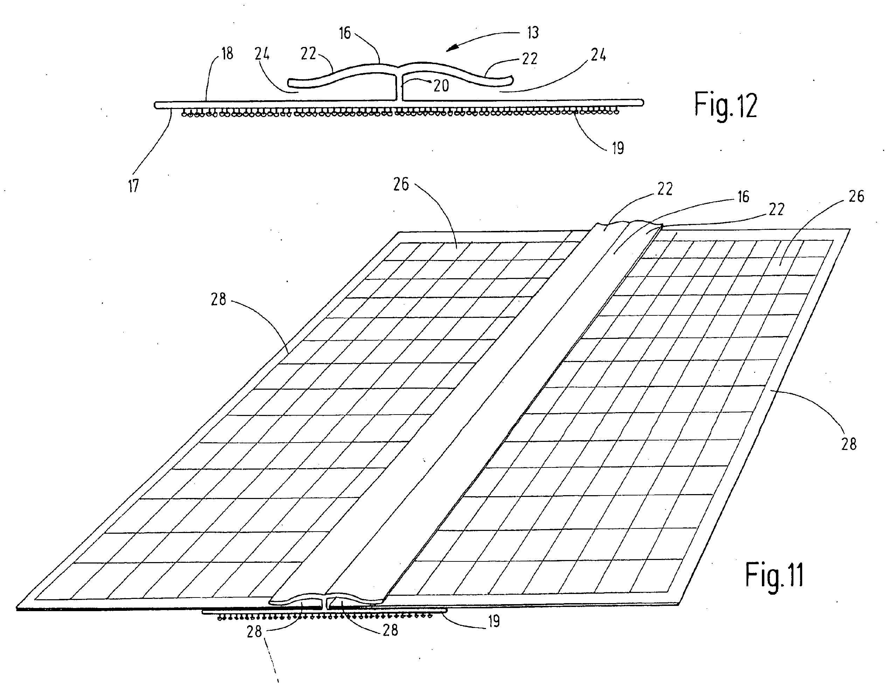

Das Band 9 des Haftverschlusselements 7 erstreckt sich in einer Lageorientierung, die auf ein zugeordnetes Tragelement ausgerichtet ist, das an der Trägerfläche 1 verankert werden soll. Bei einem jeweiligen Tragelement handelt es sich um eine Tragschiene, von der in Fig. 5 bis 10 Ausführungsbeispiele dargestellt und jeweils als Ganzes mit 13 bezeichnet sind, oder um eine jeweilige Profilleiste, wie sie in Fig. 10 und 11 gezeigt und mit 16 bezeichnet ist. Bei der Darstellung von Fig. 1 ist auf der Trägerfläche 1 lediglich ein Band 9 des Haftverschlusselements 7 für ein einziges Tragelement auf der Bitumenbahn 2 angeordnet. Bei Systemen mit mehreren Tragelementen können auf einer gemeinsamen Trägerfläche 1 mehrere Bänder 9 mit Haftverschlusselementen 7 angeordnet sein, oder es können mehrere Trägerflächen 1 mit je einem Band 9 vorgesehen sein, wie es in Fig. 1 gezeigt ist.

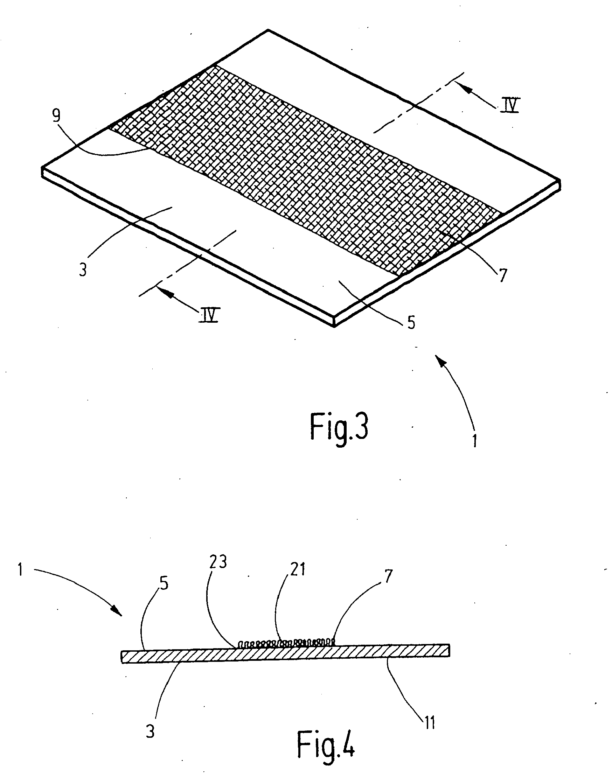

Die Fig. 3 und 4 zeigen ein zweites Ausführungsbeispiel der Trägerfläche 1 in Form einer Platte 3 aus einem elastomeren Kunststoffmaterial, beispielsweise einem synthetischen Kautschuk oder einem thermoplastischen Olefin. Wie bei dem Ausführungsbeispiel von Fig. 1 und 2 ist ein Haftverschlusselement 7 in Form eines Bandes 9 an der Oberseite 5 der Trägerfläche 1 durch Kaschieren oder Auflaminieren angebracht, wobei, wie dies ebenfalls bei dem Beispiel von Fig. 1 und 2 der Fall ist, Haftverschlusselemente vorgesehen sind, die in bekannter Bauweise Verhakungselemente 21 in Form von Pilzköpfen, Schlaufen oder Haken aufweisen können. Bei den hier vorgesehenen Ausführungsbeispielen sind bei den an der Trägerfläche 1 vorgesehenen Haftverschlusselementen 7 jeweils Verhakungselemente 21 in Form von Schlaufen vorgesehen. Derartige Haftverschlusselemente 7 bilden eine Art Flausch mit einem durch ein Gewebe gebildeten Grund. Im Hinblick auf die Durchlässigkeit des Grundes wird bei einem Auflaminieren oder Aufkleben auf die Oberseite 5 der Trägerfläche, beispielsweise der Bitumenbahn 2, so vorgegangen, dass kein Materialdurchtritt durch den Grund, beispielsweise durch plastifiziertes Bitumen, zum Bereich der Verhakungselemente 21 in Form der Schlingen oder Schlaufen gelangt.

Die Fig. 5 und 6 zeigen ein erstes Ausführungsbeispiel einer Tragschiene 13 in Form eines Hohlprofils 15, das in einem Strangprozess aus einem Kunststoffmaterial extrudiert ist. Dabei kann es sich um ein thermoplastisches Polymer handeln, beispielsweise Acryl-Nitril-Butadien-Styrol (ABS) oder, vorzugsweise, um ein Acryl-Nitril-Styrol-Acrylat. Um bei der Benutzung exponiert gelegene Teile des Hohlprofils 15 zu schützen, kann eine sonnenbeständige und/oder witterungsbeständige Beschichtung zumindest an Außenflächen des Hohlprofils 15 vorgesehen sein. Für eine solche Beschichtung kommen beispielsweise Werkstoffe wie Polmethylmethacrylat (PMMA) oder Polytetrafluorethylen (PTFE) in Frage. Auf rationelle Weise kann eine derartige Beschichtung bei der Herstellung des Hohlprofils 15 durch ein Koextrusionsverfahren gebildet werden.

Die Hohlprofile 15 weisen an der Unterseite eine ebene Festlegefläche 17 zum Anbringen eines Haftverschlusselements 19 auf, das mit dem Haftverschlusselement 7 der Trägerfläche 1 korrespondiert. Wie dieses Haftverschlusselement 7 weist auch das Haftverschlusselement 19 Verhakungselemente 21 an einem Träger 23 auf, der seitens der Trägerfläche 1 mit der Oberseite 5 der Trägerfläche 1 verklebt, verschweißt oder auf diese auflaminiert ist und seitens des Hohlprofils 15 mit der Festlegefläche 17 verklebt oder verschweißt ist. Die Haftverschlusselemente 7 und 19 können in bekannter Bauweise ausgebildet sein, d.h. sie können in an sich bekannter Weise Verhakungselemente 21 in Form von Pilzköpfen, Schlingen oder Haken aufweisen. Beim vorliegenden Ausführungsbeispiel sind die Verhakungselemente 21 am Hohlprofil 15 in Form von Pilzköpfen ausgebildet.

Anstelle des in Fig. 6 gezeigten Beispiels, bei dem das Haftverschlusselement 19 mit seinem Träger 23 an der Festlegefläche 17 befestigt ist, können alternativ die Verhakungselemente 21, insbesondere in pilzkopfartiger Ausbildung, auch an der Festlegefläche 17 aus dem Werkstoff des Hohlprofils 15 selbst gebildet sein. Als seitliche Führung für das jeweilige Band des an der Festlegefläche 17 befindlichen Haftverschlusselements 19 ist an beiden Endrändern der Festlegefläche 17 als Randeinfassung eine geringfügig vorstehende Randrippe 25 gebildet. Das Hohlprofil 15 weist, von der unteren Festlegefläche 17 ausgehend, ebenflächige Seitenwände 27 auf, die leicht konvergierend nach oben verlaufen und am oberen Ende in Profilstege 29 übergehen, die sich in zur Festlegefläche 17 paralleler Ebene gegeneinander erstrecken, jedoch in einem Abstand voneinander enden. Innerhalb der Profilform sind Innenwände 31 gebildet, die sich vom Zentralbereich der Festlegefläche 17 ausgehend zueinander divergierend nach oben zu den Profilstegen 29 hin erstrecken und mit den Seitenwänden 27 jeweils einen Aufnahmeraum 33 begrenzen. Eine in paralleler Ebene unterhalb der Profilstege 29 zwischen den Innenwänden 31 verlaufende Zwischenwand 35 begrenzt einen weiteren dreieckförmigen Raum 37 und einen darüberliegenden Raum 39, der zwischen den Profilschenkeln offen ist. Die ebenen Außenflächen der Profilschenkel 29 und der eine Art Schwalbenschwanzführung bildende Raum 39 bilden einen Abstütz- und Anbringbereich für ein betreffendes zu befestigendes Bauelement (das nicht dargestellt ist), wobei es sich beispielsweise um eine Komponente einer solartechnischen Anlage, beispielsweise ein Solarpanel, handeln kann.

Die Fig. 5 und 6 zeigen ein Ausführungsbeispiel des Hohlprofils, bei dem an einer Seitenwand 27 eine auskragende Schiene 41 angeformt ist, die einen offenen Aufnahmeraum 43 bildet, der beispielsweise als Kabelkanal für Leitungen 45 (Fig. 9 und 10) nutzbar ist.

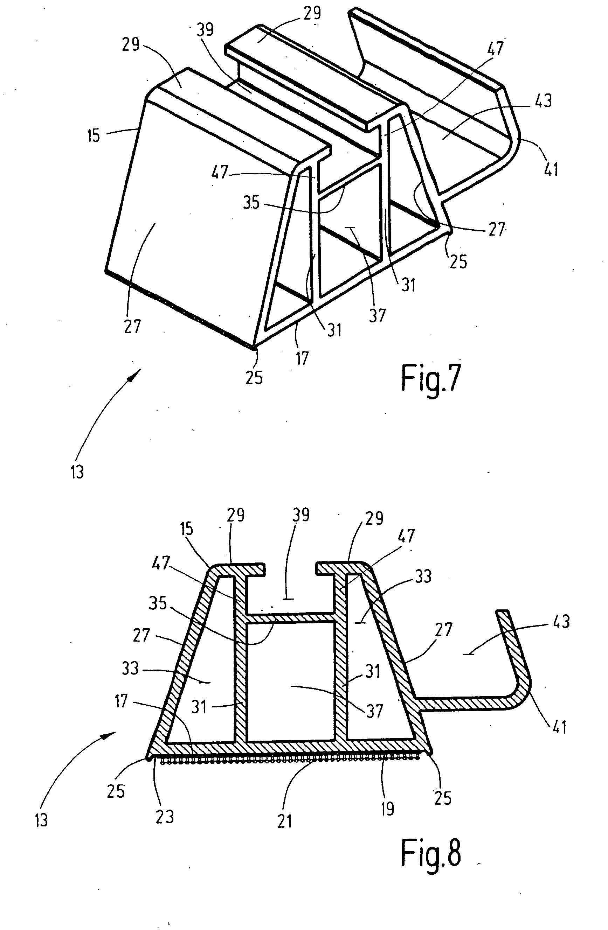

Die Fig. 7 und 8 zeigen ein abgewandeltes Ausführungsbeispiel des Hohlprofils 15, das sich vom Beispiel von Fig. 5 und 6 lediglich insofern unterscheidet, als die Innenwände 31 im Abstand voneinander, zueinander parallel und zur Festlegefläche 17 senkrecht verlaufen, so dass der unterhalb der Zwischenwand 35 befindliche Raum 43 einen rechteckförmigen Querschnitt besitzt.

Die Fig. 9 und 10 zeigen ein abgewandeltes Ausführungsbeispiel des Hohlprofils 15 von Fig. 7 und 8 ohne seitlich angebrachte Schiene, wobei in die zwischen Seitenwand 27 und Innenwand 31 gebildeten Aufnahmeräume 33 jeweils eine Leitung 45 eingelegt ist. Das Hohlprofil von Fig. 9 und 10, und ebenfalls das Hohlprofil 15 von Fig. 7 und 8, unterscheiden sich vom Hohlprofil 15 gemäß Fig. 5 und 6 auch insofern, als durch die zueinander parallel verlaufenden Endabschnitte 47 der Innenwände 31 der oben offene Raum 39 die Querschnittsform einer rechteckigen Schwalbenschwanzführung mit senkrecht zueinander verlaufenden Wandteilen besitzt.

Die Fig. 11 und 12 zeigen eine abgewandelte Ausführungsform für die Tragschiene 13 in Form einer langgestreckten, verhältnismäßig flachen Profilleiste 16. Diese ist, ebenso wie das Hohlprofil 15, aus einem entsprechenden Kunststoffmaterial in einem Strangprozess extrudiert. Die Leiste 16 weist, ebenso wie das Hohlprofil 15, an der Unterseite eine ebene Festlegefläche 17 für ein Haftverschlusselement 19 auf. Im Zentralbereich der Festlegefläche 17 erstreckt sich von deren Oberseite 18 ein Klemmteil 20 in Längsrichtung der Leiste 16, wobei das Klemmteil 20 eine Querschnittsform in der Art eines flachen T mit seitlichen Klemmflügeln 22 besitzt, die zwischen sich und der Oberseite 18 der Festlegefläche 17 einen Längsschlitz 24 begrenzen. Wie die Fig. 11 verdeutlicht, ist in den jeweiligen Längsschlitz 24 ein flexibles Solarpanel 26 einsteckbar, wobei die Flügel 22 den Befestigungsrand 28 des Solarpanels 26 klemmend festlegen, siehe Fig. 11. Bei dem Solarpanel 26 kann es sich um eine Anordnung aus Solarmodulen handeln, die auf einer Trägerfolie, die aus einem vorzugsweise genoppten Kunststoffblatt mit rechteckigem Umriss besteht, angeordnet ist. Bei handelsüblichen Solarpaneln dieser Art hat die die Module tragende Kunststofffolie Abmessungen in der Größenordnung von 55 x 40 cm und besteht aus einem witterungsbeständigen Kunststoffmaterial, wie PMMA oder PTFE, wobei die von Modulen freien Randzonen 28 als Haltebereiche zur Festlegung der Panel 26 nutzbar sind.

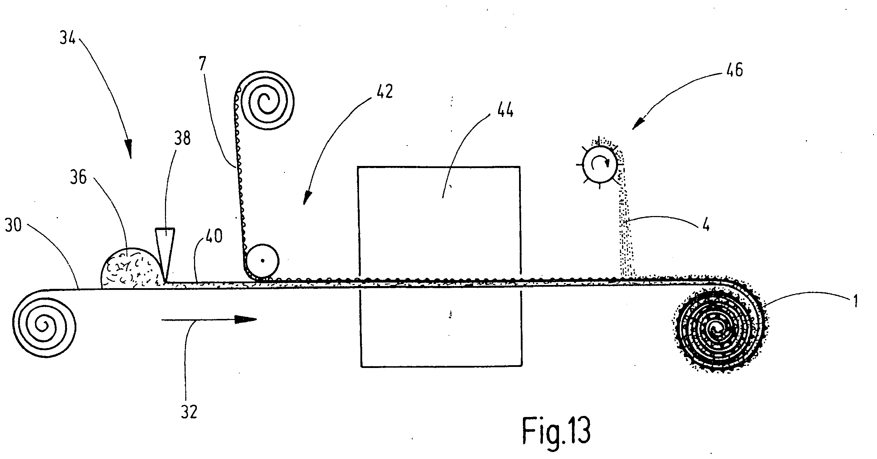

Die Fig. 13 zeigt in stark vereinfachter Darstellung die Herstellung einer erfindungsgemäßen Trägerfläche 1 an einer Bitumenbahn 2, die mit dem zugeordneten Haftverschlusselement 7 und mit angelagertem Granulat 4 versehen ist. Bei der Vorrichtung wird eine Trägerbahn 30 aus einem Kunststoffmaterial wie PTFE in einer mit Pfeil 32 bezeichneten Transportrichtung an einer Auftragestation 34 vorbeibewegt, an der aus einer Bitumenmasse, einer sog. "Melasse" 36, mittels einer Rakel 38 eine Bitumenschicht 40 auf der Transportbahn 30 gebildet wird. Diese wird mit der gebildeten Bitumenschicht 40 an einer Anbringstation 42 vorbeibewegt, an der das betreffende Haftverschlusselement 7 an der Oberseite der Bitumenschicht 40 angebracht wird, was, wie zuvor dargelegt, durch Kleben oder Auflamieren erfolgt. Anschließend läuft die Transportbahn 30 mit der Bitumenschicht 40 und dem angebrachten Band des Haftverschlusselements 7 durch einen Trockner 44 zu einer darauffolgenden Streustation 46, an der in den vom Haftverschlusselement 7 freien Oberflächenbereichen Granulat 4 zur Anlagerung aufgestreut wird. Die so hergestellte Trägerfläche 1 kann nun zusammen mit der Trägerbahn 30 aufgewickelt und als Wickel zum Benutzungsort (wie Baustelle) verbracht werden, wo nach dem Abwickeln die Trägerbahn 30 von der Unterseite der Trägerfläche 1 vor deren eigentlichen Benutzung abgenommen werden kann.

Ein sehr großer Vorteil der vorliegenden Erfindung ist, dass bei dem angesprochenen Herstellverfahren das aufzubringende Schlaufenband mit seiner Grundgewebestruktur nicht in die Bitumenbahn einzutauchen braucht, sondern vielmehr nahezu bündig auf die Oberseite der Bitumenbahn aufgebracht wird. Sofern Bitumenbestandteile in die Grundoberfläche des Trägergewebes des Schlaufenbandes eindringen, erlauben diese eine feste Verbindung des Schlaufenbandes mit dem Grundträgermaterial in Form der Bitumenschicht, ohne dass dadurch die Einhakungsfähigkeit des Schlaufenmaterials beeinträchtigt wäre. Dies gilt auch für den Fall, dass die Schlaufenoberfläche durch eine Verhakungsschicht auch in Pilzkopfform ersetzt wird.

## Patentansprüche

1. Verfahren zum Herstellen eines Befestigungssystems, insbesondere für Bauelemente fotovoltaischer Anlagen, vorzugsweise an Dachflächen bei Gebäuden, wobei in einem ersten Schritt eine Trägerfläche (1) bereitgestellt wird, auf der mindestens eine Befestigungskomponente (7, 19), bestehend aus Schlaufen- und/oder sonstigen Verhakungselementen (21), aufgebracht wird, die nach Festlegen der jeweiligen Befestigungskomponente (7, 19) im Montagezustand der Trägerfläche (1) das Anbringen zumindest einer weiteren korrespondierenden Befestigungskomponente (7, 19) erlaubt, die, mit sonstigen Verhakungselementen (21) versehen, die wieder lösbare Verbindung der zuordenbaren Befestigungskomponenten (7, 19) ermöglicht, **dadurch gekennzeichnet, dass** zur Bildung der Trägerfläche (1) eine Trägerbahn (30) bereitgestellt wird, die in einer Transportrichtung (32) an einer Auftragestation (34), an der eine Bitumenmasse (36) aufgetragen wird, sowie an einer nachfolgenden Anbringstation (42) vorbeibewegt wird, an der in einem ausgewählten Oberflächenbereich die zugeordnete Befestigungskomponente (7, 19) angebracht wird.

2. Verfahren nach Anspruch 1, **dadurch gekennzeichnet, dass** an zumindest einem Oberflächenbereich der Trägerfläche (1) mindestens eine Befestigungskomponente (7, 19), vorzugsweise durch Kaschieren oder Auflaminieren, angebracht wird.

3. Verfahren nach Anspruch 2, **dadurch gekennzeichnet, dass** die Trägerfläche (1) in Form einer dünnen Kunststoffplatte (3), vorzugsweise aus einem elastomeren Material, bereitgestellt wird.

4. Verfahren nach einem der vorstehenden Ansprüche, **dadurch gekennzeichnet, dass** die Bitumenmasse (36) durch Aufrakeln aufgetragen wird.

5. Verfahren nach einem der vorstehenden Ansprüche, **dadurch gekennzeichnet, dass** die mit der Bitumenmasse (36) und der Befestigungskomponente (7, 19) versehene Trägerbahn (30) an einer Streu-Station (46) vorbeibewegt wird, an der an von der Befestigungskomponente (7, 19) freien Flächenbereichen ein Granulat (4) aufgebracht wird.

## Claims

1. A method for producing a fastening system, in particular for components of photovoltaic systems, preferably on roof surfaces of buildings, in a first step a support surface (1) being provided, on which at least one fastening component (7, 19) consisting of loop and/or other interlocking elements (21) is applied, and which after fastening the respective fastening component (7, 19) in the mounted state of the support surface (1) allows the attachment of at least one other corresponding fastening component (7, 19) which, provided with other interlocking elements (21), enables the detachable connection of the assignable fastening components (7, 19), **characterised in that** in order to form the support surface (1) a backing web (30) is provided which is applied in one transport direction (32) at an application station (34) to which a bitumen mass (36) is applied, and is moved past a following attachment station (42) at which, in a chosen surface area, the assigned fastening component (7, 19) is attached.

2. The method according to Claim 1, **characterised in that** at least one fastening component (7, 19) is attached to at least one surface area of the support surface (1), preferably by coating or lamination.

3. The method according to Claim 2, **characterised in that** the support surface (1) is provided in the form of a thin plastic plate (3), preferably made of an elastomer material.

4. The method according to any of the preceding claims, **characterised in that** the bitumen mass (36) is applied by doctoring.

5. The method according to any of the preceding claims, **characterised in that** the backing web (30) provided with the bitumen mass (36) and the fastening component (7, 19) is moved past a sprinkling station (46) on which a granulate (4) is applied on the surfaces regions which are free of the fastening component (7, 19).

## Revendications

1. Procédé de fabrication d'un système de fixation, notamment pour des éléments de construction d'installations photovoltaïques, de préférence sur des surfaces de toit de bâtiments, dans lequel, dans un premier stade, on se procure une surface (1) de support sur laquelle on dépose au moins un composant (7, 19) de fixation, constitué d'éléments (21) de boucle et/ou d'autres éléments (21) d'accrochage, qui, après fixation des composants (7, 19) de fixation, à l'état de montage à la surface (1) de support, permet de mettre au moins un autre composant (7, 19) de fixation correspondant, qui, pourvu d'autres éléments (21) d'accrochage, rend possible la liaison redétachable du composant (7, 19) de fixation pouvant être associé, **caractérisé en ce que**, pour former la surface (1) de support, on se procure une bande (30) de support que l'on fait passer devant, dans un sens (32) de transport, un poste (34) de dépôt où l'on dépose une masse (36) de bitume, ainsi que devant un poste (42) de pose venant ensuite où l'on met le composant (7, 19) de fixation associé dans une région sélectionnée de la surface.

2. Procédé suivant la revendication 1, **caractérisé en ce que** l'on met au moins un composant (7, 19) de fixation, de préférence par plaquage ou par laminage, sur au moins une région de surface de la surface (1) de support.

3. Procédé suivant la revendication 2, **caractérisé en ce que** l'on se procure la surface (1) de support sous la forme d'une plaque (3) mince en matière plastique, de préférence en une matière élastomère.

4. Procédé suivant l'une des revendications précédentes, **caractérisé en ce que** l'on dépose la masse (36) de bitume par dépôt à la racle.

5. Procédé suivant l'une des revendications précédentes, **caractérisé en ce que** l'on fait passer la bande (30) de support, pourvu de la masse (36) de bitume et du composant (7, 19) de fixation, à un poste (46) de dispersion ou on dépose un granulé sur des régions de surface exemptes du composant (7, 19) de fixation.
